# EUROPEAN PATENT SPECIFICATION

(11) **EP 2 224 772 B1**
(45) Date of publication and mention of the grant of the patent: **08.11.2017**
(21) Application number: 09154058.3
(22) Date of filing: 27.02.2009
(51) Int. Cl.: H04W 48/18

(54) **Method, apparatus and system for battery resource management via traffic steering**
Verfahren, Vorrichtung und System für die Batterieressourcenverwaltung durch Verkehrslenkung
Procédé, appareil et système pour la gestion de ressources de batterie via la canalisation de trafic

(43) Date of publication of application: 01.09.2010
(73) Proprietor: BlackBerry Limited, Waterloo, ON N2K 0A7 (CA)
(72) Inventor: Slack, Phillip, Slough, Berkshire SL1 3XE (GB)
(74) Representative: MERH-IP Matias Erny Reichl Hoffmann Patentanwälte PartG mbB

(56) References cited:
- EP-A- 1 926 283
- WO-A-02/03733
- GB-A- 2 346 507

## Description

### FIELD

The present specification relates generally to telecommunications and more specifically relates to a method and system for managing battery resources in an electronic device via traffic steering.

### BACKGROUND

With the desire to increase wireless access speeds, a proliferation of bearer paths has resulted. A non-limiting list of example bearer paths include Global System for Mobile communications (GSM), General Packet Radio Service (GPRS), Enhanced Data Rates for GSM Evolution (EDGE), and the Third-generation mobile communication system (3G). However, different bearer paths consume different amounts of battery resources in the wireless devices that access those bearer paths. Thus, when operating on certain bearer paths, battery resources are reduced in the wireless device.

EP1926283 describes a method for controlling a mobile node in a data communications network. A mobile node may include different radio interfaces for communicating user data traffic and mobility protocol data traffic via different radio access technologies. The power to each of the radio interfaces may be switched according to the amount of user data traffic being communicated to and from an application running on the mobile node. WO02/03733 describes a method and apparatus for selecting an access technology in a multi-mode terminal. Information is exchanged between a multi-mode terminal and at least one base station using a first access technology, the multi-mode terminal being capable of exchanging information with the at least one base station using a number of access technologies. The type of information exchanged is identified, and at least a second access technology is determined, different from the first access technology, that is capable of exchanging information of the identified information type. The first and at least second access technologies form a set of compatible access technologies. A determination is made as to the minimum radiated power level needed to exchange the information with the at least one base station for each of the compatible access technologies. An optimal access technology requiring a lowest amount of battery energy among the set of compatible access technologies is selected to maintain the minimum radiated power level needed to exchange the information between the multi-mode terminal and the at least one base station. GB2346507 describes a method of selecting a network in a cellular communications system comprising a plurality of networks in which a user transmits a resource query identifying a service and a service provider to different networks, the networks acquire service provider resource functions from the service provider and determine a respective network resource function applicable to that network for delivery of the service via a further communication element (such as a landline link) and a respective overall resource function incorporating the network and service provider resource functions, networks transmit their overall resource functions to the user and the user selects whichever network has the optimum overall resource function.

### SUMMARY

An aspect of the specification provides a system of managing battery life of a wireless device by choosing a radio interface based on application requirements, comprising:
a wireless device configured to send a request to an intermediation server (or an application server);
an intermediation server (or an application server) configured to:
   Request and fetch content from a remote content server

Perform real-time analysis to establish content type either by, for example:
a. Header parsing for size or Multipart Internet Mail Extension (MIME) type;
b. Content analysis according to gauge complexity/embedded graphics or media;
c. Assigning traffic profile to the request based on real-time analysis and/or predetermined rankings;

The result can be to combine handheld capabilities and traffic profile to determine an available transport bearer list ordered by the most optimal according to battery life of the device.

The wireless device is also configured to receive the suggested transport bearer list and establish or move to the most optimal available bearer.

The wireless device is also configured to receive content via the established battery-optimized bearer path.

Another aspect of the specification provides a method of managing battery resources in a wireless device connected to a network via a plurality of bearer paths, the method comprising:
receiving a content request from the wireless device via one of the bearer paths;
performing an analysis of content associated with the content request;
determining a battery-optimized bearer path based on the analysis of the content; the battery-optimized bearer path determined according to which of the bearer paths consumes less battery resources of the wireless device than another one of the bearer paths, and which is also capable of fulfilling the content request;
sending an indication of the battery-optimized bearer path to the wireless device via one of the bearer paths.

The method can further comprise receiving the indication at the wireless device and selecting the battery-optimized bearer path.

The method can further comprise receiving the content at the wireless device via the battery-optimized bearer path.

The method can further comprise sending the content to the wireless device via the battery-optimized bearer path.

The method can further comprise optimizing the content according to the hardware constraints of the wireless device prior to sending the content via the battery-optimized bearer path.

The content can be at least one of web-pages, email, audio media, video media, streaming media, instant messaging, mapping services, voice-over-Internet-protocol communications, social networking services.

The analysis can comprise analyzing complexity of embedded graphics or media within the content.

The analysis can comprise an examination of traffic profiles associated with the content request based on real-time analysis.

The analysis can comprise an examination of traffic profiles associated with the content request based on predetermined ranking ordered by the most optimal according to battery resource consumption of the device.

A first one of the bearer paths can be based on EDGE, and a second one of the bearer paths can be based on 3G.

Another aspect of the specification provides an intermediation server configured to assist in managing battery resources in a wireless device connected to a network via a plurality of bearer paths. The server comprises a computing environment comprising non-volatile storage, volatile storage, and a network interface interconnected by at least one processor. The network interface is connectable to the wireless device via at least one of the bearer paths. The processor is configured to receive a content request from the wireless device via the one of the bearer paths. The processor is configured to perform an analysis of content associated with the content request and to determine a battery-optimized bearer path based on the analysis of the content. The battery-optimized bearer path can be determined according to which of the bearer paths consumes less battery resources of the wireless device than another one of the bearer paths, and which is also capable of fulfilling the content request. The processor further is configured to send an indication of the battery-optimized bearer path to the wireless device via one of the bearer paths.

Another aspect of the specification provides a wireless electronic device connected to a network via a plurality of bearer paths. The device comprises a computing environment comprising non-volatile storage, volatile storage, and a plurality of wireless network interfaces interconnected by at least one processor. The network interfaces are connectable to the network via each of the bearer paths. The processor is configured to send a content request via the one of the bearer paths and to receive an indication from an intermediation server of a battery-optimized bearer path. The selected battery-optimized bearer path can be based on the analysis of the content by the intermediation server. The battery-optimized bearer path can be determined according to which of the bearer paths consumes less battery resources of the wireless device than another one of the bearer paths, and which is also capable of fulfilling the content request. The processor further is configured to select one of the bearer-paths based on the indication.

### BRIEF DESCRIPTION OF THE DRAWINGS

Figure 1 shows a schematic representation of a system for battery life management.
Figure 2 shows a schematic representation of the electronic device shown in the system of Figure 1.
Figure 3 shows a flow-chart depicting a method for battery life management.
Figure 4 shows a schematic representation of a system for battery life management as a variation on the system of Figure 1.
Figure 5 shows a schematic representation of a system for battery life management as a variation on the system of Figure 1.
Figure 6 shows a flow-chart depicting another method for battery life management based on the system of Figure 5.
Figure 7 shows a further schematic representation of the system from Figure 5 when scaled to a larger deployment.
Figure 8 shows a flow-chart depicting a method for optimal bearer path selection as a variation on the method of Figure 3 that can be used with the systems or their variations described herein.
Figure 9 shows a flow-chart depicting a method for optimal bearer path selection as a variation on the method of Figure 3 that can be used with the systems or their variations described herein.

### DESCRIPTION OF PREFERRED EMBODIMENTS

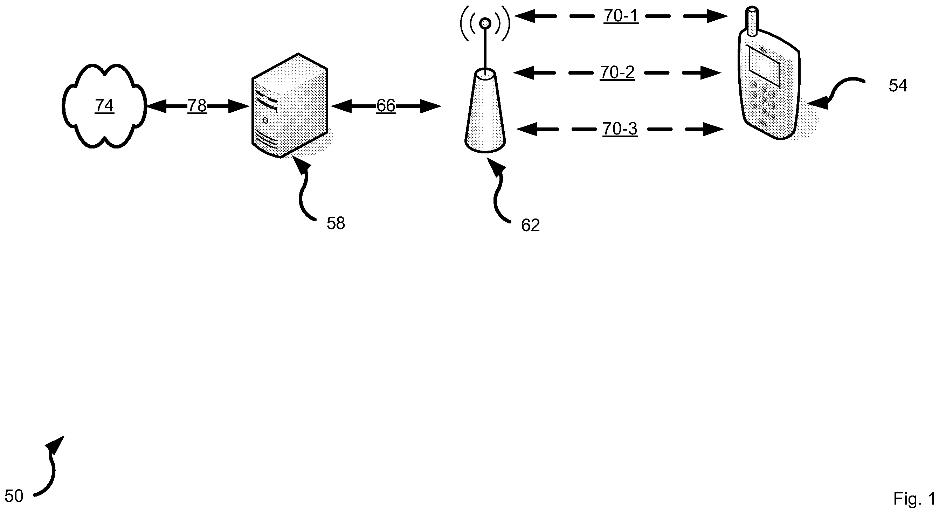

Referring now to Figure 1, a system for battery resource management in a wireless computing device is indicated generally at 50. In a present embodiment system 50 comprises a plurality of a wireless computing device 54 and at least one intermediation server 58. A wireless base station 62 interconnects computing device 54 and intermediation server 58. A backhaul link 66 interconnects base station 62 with server 58. A plurality of wireless bearer paths 70-1, 70-2, 70-3 (generically bearer path 70, and collectively, bearer paths 70) can be used to interconnect base station 62 with computing device 54. In a present exemplary embodiment, bearer path 70-1 is GPRS, bearer path 70-2 is EDGE, and bearer path 70-3 is 3G. Intermediation server 58 is also connected to a network 74 via another backhaul link 78. Network 74 can be any type of network that can host content that is accessible to device 54. As will be discussed further below, the type of content is not particularly limited.

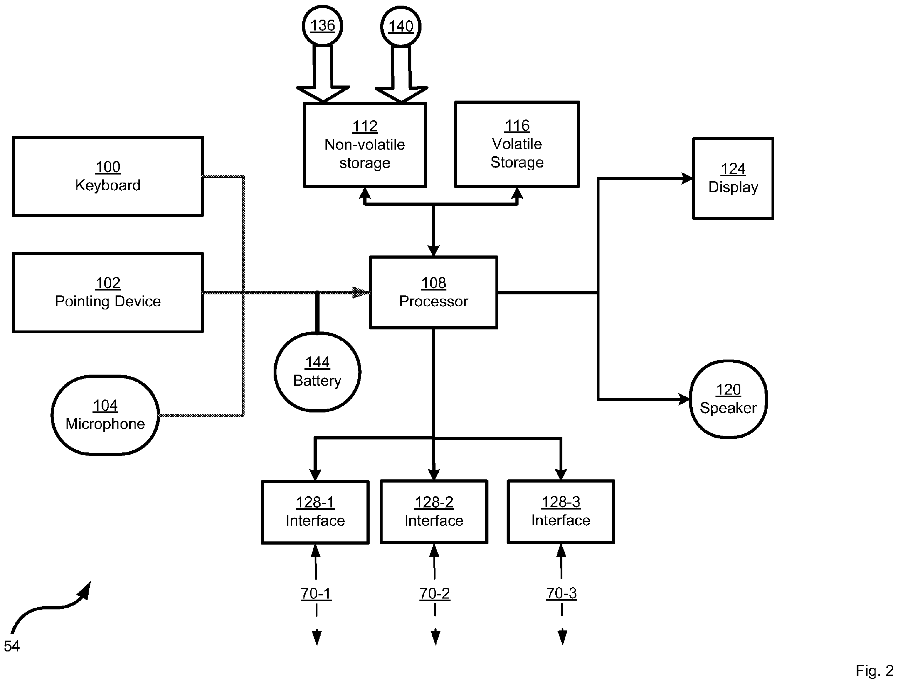

Referring now to Figure 2, computing device 54 can be any type of electronic device that can be used in a self-contained manner and to interact with content available over network 74. Interaction includes displaying of information on computing device 54 as well as to receive input at computing device 54 that can in turn be sent back over network 74. It should be emphasized that the structure in Figure 2 is purely exemplary, and contemplates a device that be used for both wireless voice (e.g. telephony) and wireless data (e.g. email, web browsing, text) communications. In a present embodiment, computing device 54 is a mobile electronic device with the combined functionality of a personal digital assistant, a cell phone, and an email paging device. (Although variants on device 54 can include a laptop computer or a desktop computer.) Many well known cellular telephone models, or variants thereof, are suitable for the present embodiment.

Device 54 thus includes a plurality of input devices which in a present embodiment includes a keyboard 100, a pointing device 102, and a microphone 104. Pointing device 102 can be implemented as a track wheel, trackball or the like. Other input devices, such as a touch screen are also contemplated. Input from keyboard 100, pointing device 102 and microphone 104 is received at a processor 108. Processor 108 is configured to communicate with a non-volatile storage unit 112 (e.g. Erasable Electronic Programmable Read Only Memory ("EEPROM"), Flash Memory) and a volatile storage unit 116 (e.g. random access memory ("RAM")). Programming instructions that implement the functional teachings of device 54 as described herein are typically maintained, persistently, in non-volatile storage unit 112 and used by processor 108 which makes appropriate utilization of volatile storage 116 during the execution of such programming instructions.

Processor 108 in turn is also configured to control a speaker 120 and a display 124. Processor 108 also contains a plurality of network interfaces 128, which are implemented in a present embodiment as radios configured to communicate over respective bearer paths 70. In general, it will be understood that interfaces 128 are configured to correspond with the network architecture that defines each link 70. It should be understood that in general a wide variety of configurations for device 54 are contemplated.

In a present embodiment, device 54 is also configured to maintain a web-browser application 136. Web-browser application 136 is maintained within non-volatile storage 112. Processor 108 is configured to execute web-browser application 136, receive input from keyboard 100 relative to web-browser application 136, and to generate graphical interfaces on display. Processor 108 is further configured to request content from network 74 via an appropriate bearer path 70, as will be discussed further below.

In a present embodiment, device 54 is also configured to maintain an interface selector application 140. Interface selector application 140 is maintained within non-volatile storage 112. Processor 108 is configured to execute interface selector application 140 in order to select one or more interfaces 128 and the corresponding bearer paths 70, as will be discussed further below.

Device 54 also includes a battery 144 or other power supply. Battery 144 provides power to components within device 54. Of note is that the rate of drain on battery 144 varies according to which interface 128 is active. In the present example, interface 128-3 has the greatest power consumption in relation to interface 128-2. In turn, interface 128-2 consumes more power than interface 128-1. Therefore interface 128-3 drains battery 144 at a greater rate than interface 128-2, and interface 128-2 drains battery 144 at a greater rate than interface 128-1.

Server 58 can be based on any well-known server environment including a module that houses one or more central processing units, volatile memory (e.g. random access memory), persistent memory (e.g. hard disk devices) and network interfaces to allow server 58 to communicate over network 74 and with base station 62. For example, server 58 can be a Sun Fire V480 running a UNIX operating system, from Sun Microsystems, Inc. of Palo Alto Calif., and having four central processing units each operating at about nine-hundred megahertz and having about sixteen gigabytes of random access memory. However, it is to be emphasized that this particular server is merely exemplary, and a vast array of other types of computing environments for server 58 is contemplated.

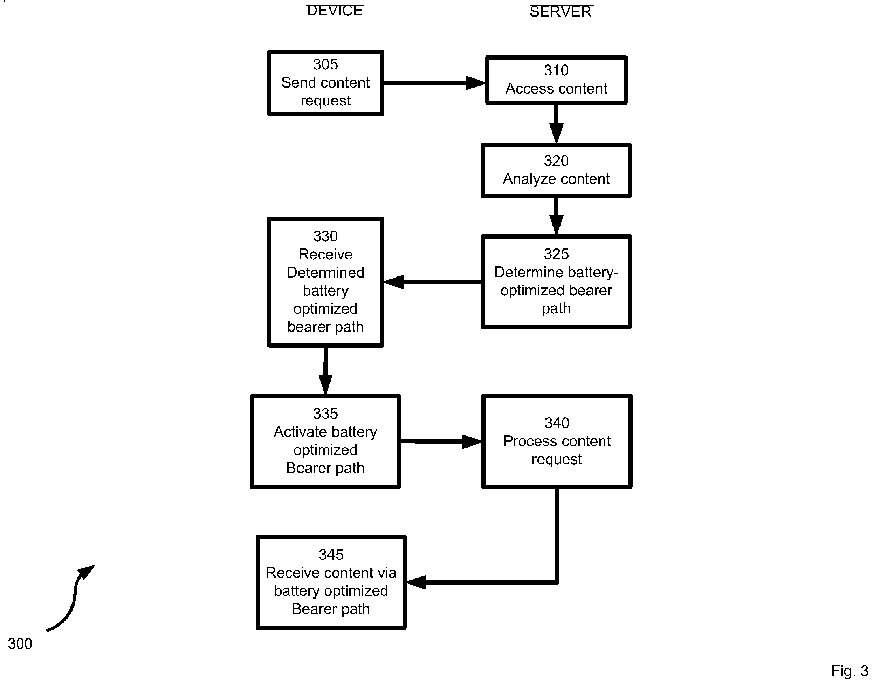

Referring now to Figure 3, a flowchart depicting a method of managing battery resource via traffic steering is indicated generally at 300. Method 300 can be implemented on system 50 or a suitable variation thereof. Block 305 comprises sending a content request from a wireless electronic device, which in turn is received at an intermediation server. In a present embodiment the request is sent from device 54 to server 58 via any bearer path 70, using any appropriate channel on that bearer path 70 that is active at the time the time the request is generated. In a present embodiment the content request is generated by web-browser application 136 on device 54, which is selecting a web-page hosted on a web-server (not shown) connected to network 74.

At block 310, server 58 has received the content request from block 305 and accesses the requested content. In the present example, server 58 will access the appropriate web-server on network 74 in order to fulfill block 310. At block 320, the content accessed at block 310 is analyzed. Such an analysis, in the case of web-content, can include, for example, analyzing the selected web-page for the number frames, streaming media, scripts and other constituent elements of that web-page.

Block 325 comprises determining the battery-optimized bearer path associated with the content analyzed at block 320. For example, assume the selected web-page at block 320 includes streaming media having bandwidth speeds that require 3G and which would be too slow over EDGE to deliver the proper content experience. In this first example, the determination at block 325 comprises determining that 3G bearer path 70-3 is required in order to actually deliver the selected content, and therefore 3G bearer path 70-3 is determined to be the battery-optimized bearer path. As a second example, assume that the selected web-page at block 320 includes no frames, streaming media or scripts and includes very little hyper-text mark up language (HTML) but is predominantly American Standard Code for Information Interchange (ASCII) text. In this second example, the determination at block 325 comprises determining that 3G bearer path 70-3 is NOT required in order to actually deliver the selected content, and that EDGE bearer path 70-2 can efficiently deliver the requested HTML and ASCII, in which case EDGE bearer path 70-2 is determined to be the battery-optimized bearer path.

Block 330 comprises receiving at the device the determined battery-optimized bearer path. Block 330 can be effected by server 58 sending the determination made at block 325 via any bearer path 70, using any appropriate channel on that bearer path 70 that is active at the time the time the determination at block 325 is effected. (The bearer path 70 and appropriate channel on that bearer path 70 can be the same as those used to effect block 325 as discussed above, and indeed the reply of the determined battery-optimized bearer path can be responsive to the request from block 305).

Block 335 comprises activating the battery-optimized bearer path. In the present example, block 335 can be effected by interface selector application 40. Those skilled in the art will appreciate that where the battery-optimized bearer path is already active, then no actual action need be effected by interface selector application 40. For the sake of explanation however, assume that 3G bearer path 70-3 was active, but that the analysis at block 320 indicated that the requested web-page at block 305 was predominantly ASCII text with a small amount of HTML, and therefore that the battery-optimized bearer path as determined at block 325 is EDGE bearer path 70-2. Using this assumption, then at block 335 interface selector application 40 will indicate instructions to processor 108 so as to control device 54 so as to deactivate interface 128-3 and deactivate 3G bearer path 70-3, and activate interface 128-2 and EDGE bearer path 70-2.

(It is also contemplated that, in certain embodiments, device 54 is configured to always default to a bearer path (e.g. EDGE) that consumes less power than another bearer path (e.g. 3G), and therefore during method 300, device 54 will only move to the 3G bearer path for brief periods to effect certain content requests, thereafter defaulting back to the EDGE bearer path.)

Block 340 comprises processing content request. In a present embodiment block 340 is performed by server 58 and occurs subsequent to block 335. Where block 340 is performed by server 58, then block 340 can be contingent on receipt of an acknowledgement at server 58 that the determined battery-optimized bearer path has been activated. Such receipt of acknowledgment can be implicit, by communicating with base station 62 using the activated bearer path to ascertain that base station 62 is now communicating with device 54 via the determined battery-optimized bearer path, or it can be explicit by waiting for device 54 to send an express indication that block 335 has been effected.

Block 345 comprises receiving the content via the battery-optimized bearer path at the device. Thus, continuing with the example above where EDGE bearer path 70-2 has been activated, then at block 345 the requested predominantly ASCII text with a small amount of HTML web-page can actually be delivered over EDGE bearer path 70-2 to device 54.

Variations on the foregoing are contemplated. For example, other types of content requests, from other types of applications (not discussed herein) on device 54 are contemplated. For example, device 54 can also include an email application and the content request can be for email. Other content request examples include media (e.g. video or audio), instant messaging, mapping services (e.g. Google maps), voice-over-Internet-protocol, social networking services (e.g. Facebook). Also note that the content may not necessarily be hosted on network 74, but can be content actually hosted, or at least cached, on server 58 itself.)

Note it should be understood that the types of analysis performed at block 320 is not particularly limited and can correspond to the content type. For example where the content is email, then the analysis can include header parsing for size of the message or type of Multipart Internet Mail Extension (MIME).

Such content analysis can also be to gauge complexity of embedded graphics or media.

Such content analysis can also be based on traffic profiles to request based on real-time analysis and/or predetermined rankings;

Such content analysis can also be based on a combination of known handheld capabilities and traffic profile to determine available transport bearer list ordered by the most optimal according to battery resources of the device.

Content analysis at block 320 and/or determinations at block 325 can also be based on historic data that includes analysis of which bearer paths 70 deplete battery 144 most quickly as corresponded to types of content carried over that particular bearer path 70.

Note, as a further variation, intermediation server 58 can be configured to perform content optimization functions whereby content requested from network 74 for device 54 is adjusted or modified into a format that conforms to the functionality of web-browser application 136 and other constraints of device 54. In this variation, method 300 can be effected as part of the optimization functions. Furthermore, the content optimization functions can be structured so as to package content, if possible, into a format that makes use of a bearer path 70 that has consumes fewer battery resources on device 54.

As a still further variation, block 310-325 can be performed on a polling basis, without waiting for block 305. By polling basis, it is meant that server 58 can regularly access and analyze content on network 74, without waiting for block 305 to be effected. In this fashion, the determination of a battery-optimized bearer path can be determined in advance of any request at block 305 allowing for a faster response. Likewise, device 54 can be configured to maintain a cache corresponding to various battery-optimized bearer paths as determined by server 58, thereby performing blocks 310-330 in advance of any actual request for content consistent with block 305.

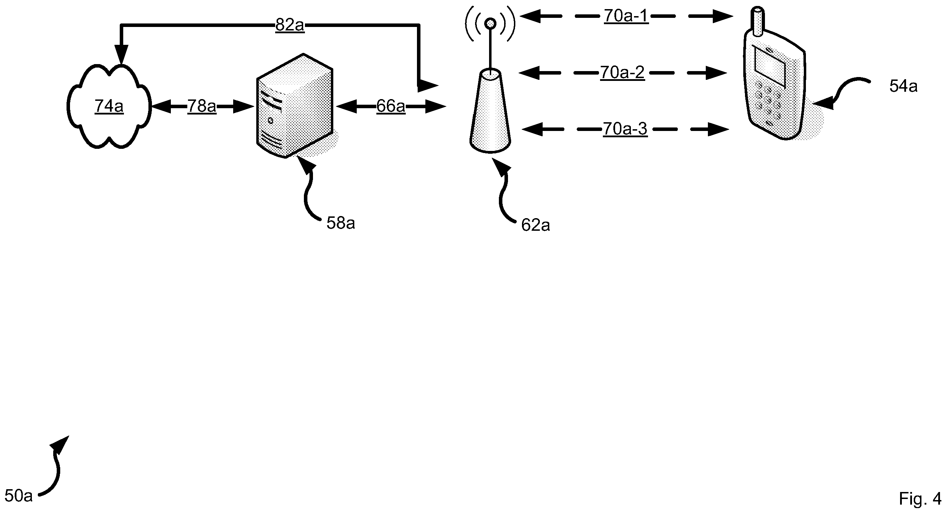

As a further example of a variation on the foregoing, Figure 4 shows system 50a which is a variation on system 50 and like elements in system 50a include like references to their counterparts in system 50, except followed by the suffix "a". However, unlike system 50, system 50a also includes a direct link 82a from base station 62a to network 74a that bypasses server 58a. In system 50a, as a variation on method 300, block 340 is performed by device 54a itself, (having already activated the battery-optimized link), whereby device 54 actually requests the content directly from network 74a, bypassing intermediation server 58a via direct link 82a. In this variation, server 58a is used to determine the battery-optimized bearer path and to advise device 54a, but otherwise device 54a effects a direct request for the content.

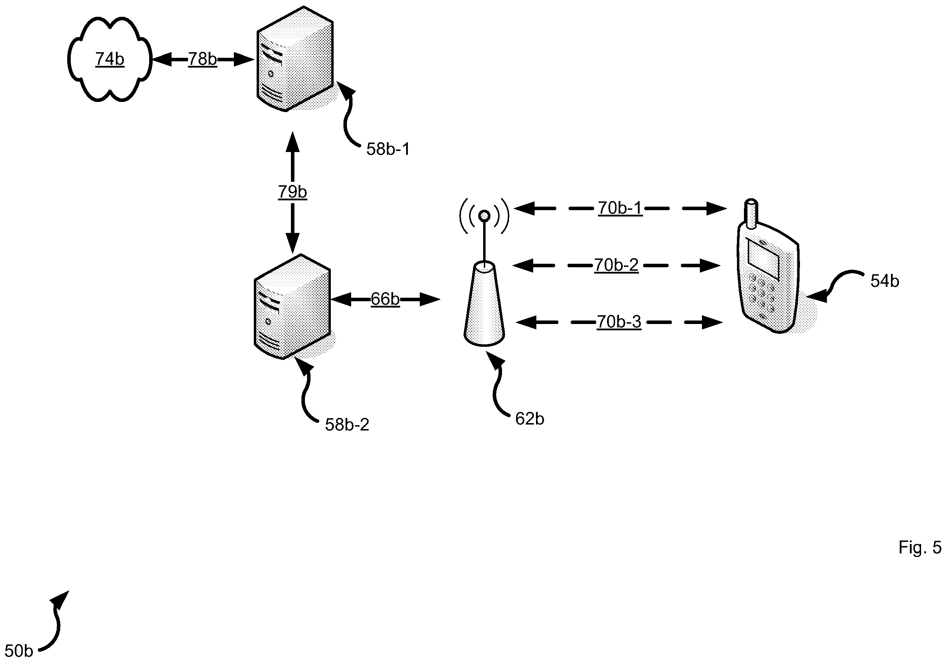

As a further example of a variation on the foregoing, Figure 5 shows system 50b which is a variation on system 50 and like elements in system 50b include like references to their counterparts in system 50, except followed by the suffix "b". However, unlike system 50, in system 50b, server 50 is implemented as a first server 58b-1 and a second server 58b-2, and a link 79b is provided between server 58b-1 and server 58b-2.

In system 50b, server 58b-1 can be implemented, in a non-limiting example, as an enterprise server, such as a Blackberry Enterprise Server that is hosted and maintained by an enterprise that is associated with device 54b whereas server 58b-2 can be implemented as a relay server such as a Relay Server that is hosted and maintained by a carrier, or a carrier partner such as Research In Motion Inc. However, the entity or entities that host(s) and maintain(s) each server 58b-1 and server 58b-2 is not particularly limited and is discussed herein for an example of a potential real-world implementation. In terms of technical structure, and as will become apparent from the discussion below, server 58b-1 can be referred to as a content intermediation server 58-1, whereas server 58b-2 can be referred to as a transport intermediation server.

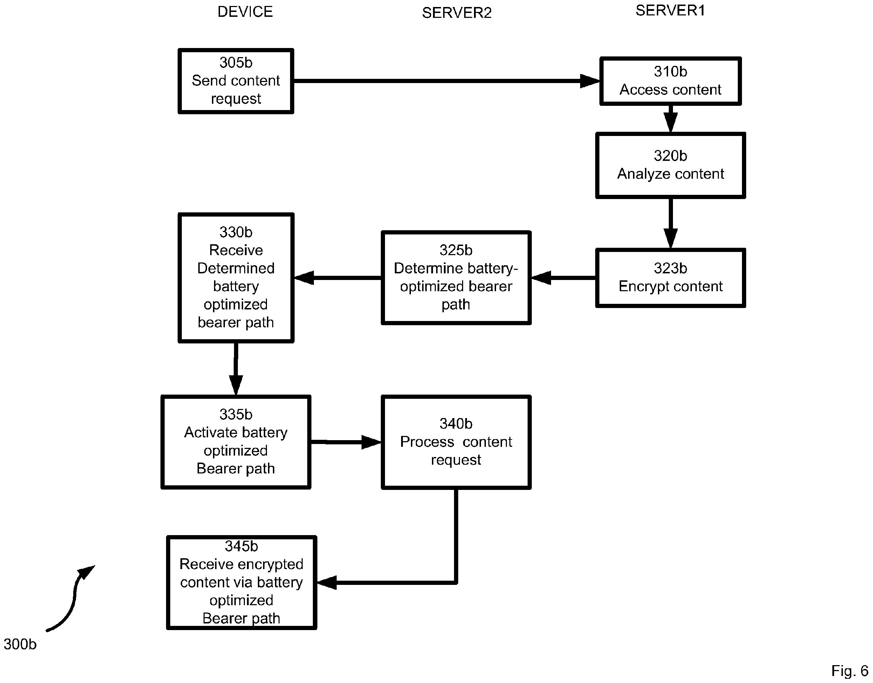

Referring now to Figure 6, a flowchart depicting a method of managing battery resource via traffic steering is indicated generally at 300b. Method 300b can be implemented on system 50b or a suitable variation thereof. Block 305b comprises sending a content request from a wireless electronic device, which in turn is received at a first intermediation server. In a present embodiment the request is sent from device 54b to server 58b-1 via any bearer path 70b (using any appropriate channel on that bearer path 70b, that is active at the time the time the request is generated) and in turn via server 58b-2. In a present embodiment the content request is generated by web-browser application 136 on device 54b, which is selecting a web-page hosted on a web-server (not shown) connected to network 74b. The request at block 305b can be sent in an encrypted format such that server 58b-2 passes the encrypted request through to server 58b-1, and server 58b-1 decrypts the request.

At block 310b, server 58b-1 has received the content request from block 305b and accesses the requested content. In the present example, server 58b-1 will access the appropriate web-server on network 74b in order to fulfill block 310b. At block 320b, the content accessed at block 310b is analyzed. Such an analysis, in the case of web-content, can include, for example, analyzing the selected web-page for the number frames, streaming media, scripts and other constituent elements of that web-page.

Block 323b comprises encrypting the content. In this manner the actual content that is ultimately destined for device 54b can be kept confidential during transmission from server 58b-1 to electronic device 54b. (It will thus now be apparent that server 58b-1 and device 54b maintain key pairs or other encryption/decryption functionality).

At this point, server 58b-1 sends a) the content in encrypted form; and b) an unencrypted header file that includes the results of the analysis from block 320b; to server 58b-2.

At block 325b, server 58b-2 has received this data. Block 325b comprises determining the battery-optimized bearer path associated with the content analyzed at block 320b. The determination is based on contents of the unencrypted header file that includes the results the header from block 320b. Block 325b is otherwise performed in substantially the same manner as block 320 from method 300. Block 330b and block 335b are also performed substantially in the same manner as block 330 and block 335, respectively, from method 300.

Block 340b comprises processing content request. Block 340b is also performed in substantially the same manner as block 340 from method 300, except that in block 340b the encrypted version of the content (as encrypted at block 323b) is maintained at server 58b-2 and sent to device 54b.

Block 345b is otherwise performed in substantially the same manner as block 345 from method 300.

(Note that, as a variation of the foregoing, block 340b need not be performed by server 58b-2 but can be performed elsewhere, thus limiting the functionality of server 58b-2 to the actual setting up of the appropriate bearer path 70b. In this variation, server 58b-1 need not actually pass the encrypted content to server 58b-2.)

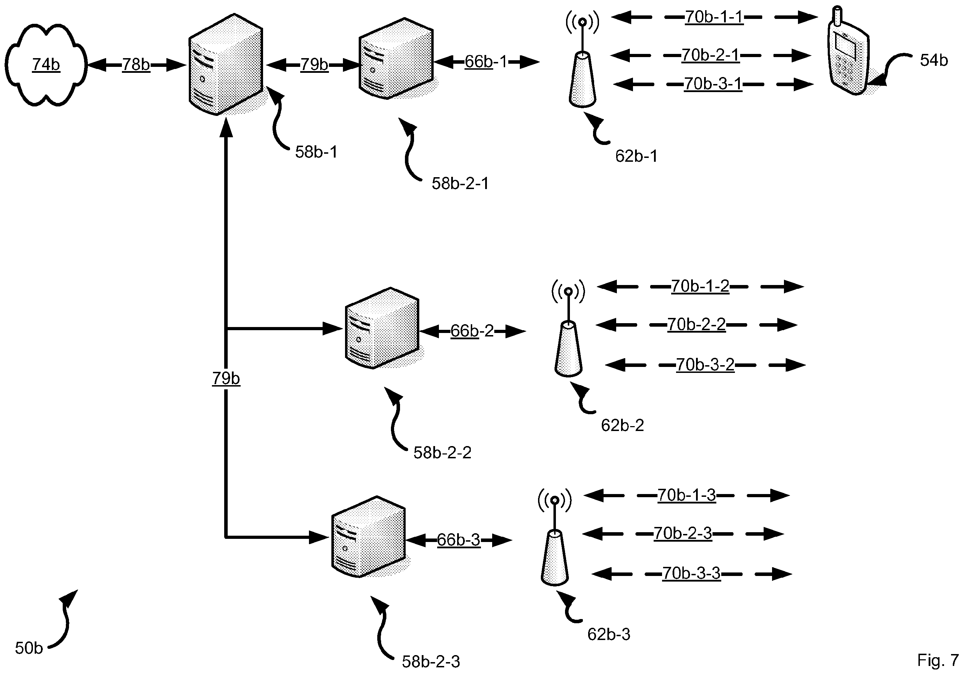

Note that, advantageously in method 300b, server 58b-1 need not understand the nature of paths 70b or the capabilities of device 54b, and therefore functionality for block 325b is shifted onto server 58b-2 in a manner that does not burden the computing resources of server 58b-1. At the same time, content is still encrypted between server 58b-1 and device 54b. This becomes even more advantageous when system 50b is scaled to include multiple content servers 58b-1 or multiple transport servers 58b-2 or both. Figure 7 shows an example where system 50b is scaled to include three transport servers 58b-2-1, 58b-2-2 and 58b-3-3, each of which connect to their own base stations 62b and bearer paths 70b. Device 54b is capable of "roaming" to connect with those different base stations 62b-1, 62b-2, 62b-3. Each of those base stations 62b-1, 62b-2, 62b-3 can be located anywhere in the world, and it is contemplated that each base station 62b-1, 62b-2 and 62b-3 can be based on different infrastructures or architectures and each respective bearer path 70b can likewise vary across different base stations 62b. For example, bearer paths 70b-1-1, 70b-2-1 and 70b-3-1 can correspond to bearer paths 70b-1, 70b-2 and 70b-3, while bearer path 70b-2-2 can be based on 4G, bearer path 70b-2-2 can be based on Worldwide Interoperability for Microwave Access, (WiMAX) and bearer path 70b-2-3 can be based on Institute of Electrical and Electronics Engineers (IEEE) 802.11. According to this specific example, each transport server 58b-2 can be configured to maintain network infrastructure data representing the configuration of its respective bearer paths 70b, as well as to maintain data representing the capabilities of device 54b to actually utilize such bearer paths, such that each transport server 58b can perform step 325b based on the content analysis of step 320b, as well as the network infrastructure data and capabilities of device 54b which are locally maintained in each transport server 58b. In this manner, the computing resources of content server 58b-1 need not be burdened with maintaining data relative to upgrades or changes that can occur to the various bearer paths 70b and the corresponding upgrades or changes to the capabilities of device 54b, which may also be upgraded from time to time. Those skilled in the art will now recognize that system 50b can also be scaled to include multiple devices 54b, each with different capabilities, and multiple content servers 58b, and thereby articulate a system that further benefits from these and other advantages. In such a scaled configuration, one more devices 54b can be paired with one or more content servers 58b for security or encryption or both, but at the same time the bearer path selection functionality is maintained by each server 58b.

Combinations and subsets of the variations are also contemplated. For example, particularly in system 50b and its scaled versions, content server 58b-1 can be configured to simply determine the size of the content at block 320, and to forward that sizing information to transport server 58b-2. The transport server 58b-2 can be configured to select a bearer path 70b based on the size, on the basis that beyond a predefined size of the content, a higher bearer path (e.g. 3G is higher than EDGE) will be warranted, but below that predefined size a lower bearer path (e.g. EDGE is lower than 3G) will be warranted. The predefined size threshold can be based on the size of the channel overhead that is necessary to set up the higher bearer path, such that if the size of the content is sufficiently great it will justify expending the channel overhead setup for the higher bearer path, but if the size of the content is not sufficiently great then the lower bearer path is justified. In this configuration, it can be desired to configure system 50b such that device 54b is defaulted to the lower bearer path, and device 54b will only be transitioned to a higher bearer path on an as needed basis using method 300b to fetch content beyond the predefined size, after which device 54b will be automatically transitioned to the lower bearer path.

It should be understood that the type of content need not be limited to web-pages, and can include emails, media, applications, application data, or any other type of content that device 54b can be configured to access from network 74b.

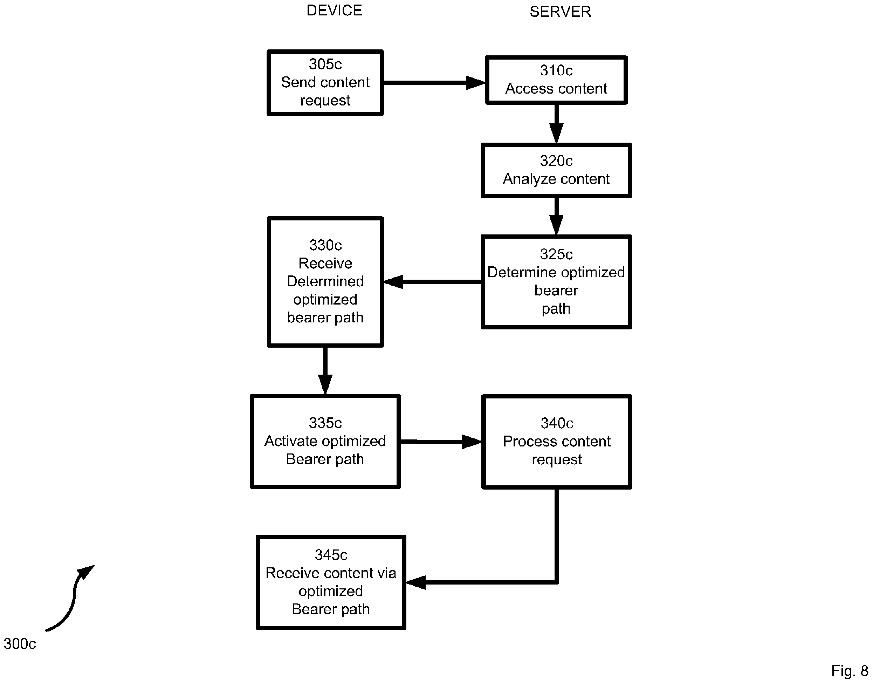

Referring now to Figure 8, a flowchart depicting a method of selecting an optimal bearer path is indicated generally at 300c. Method 300c can be implemented on system 50 or a suitable variation thereof. Method 300c can also be varied in substantially the same manner that method 300 is varied to provide method 300b.

Of note is that in method 300c, at block 325c server 58 determines an optimal bearer path and at block 330c device 54 receives the determined optimal bearer from server 58. The determination at block 325c can be based on different criteria, other than, or in addition to, whether or not the consumption of battery 144 resources is optimized.

Exemplary criteria include, but are not limited to, the overall speed at which content can be expected to be delivered over a particular bearer path 70. For example, notwithstanding the fact that the bearer path 70 that has the greatest speed (e.g. 3G as opposed to EDGE) has been selected on device 54, server 58 can be configured to analyze the requested content at block 320, and compare that analysis with known conditions of link 66 and bearer paths 70, to verify that the selected bearer path is indeed capable of delivering the content at the greatest speed. While counterintuitive from the perspective of device 54, it is possible in certain circumstances that an EDGE bearer path 70 can be capable of delivering certain content at greater speeds than a 3G bearer path 70, and server 58 can be so equipped to ascertain this fact. Such circumstances can include congestion over 3G bearer path 70, or environmental factors such as weather. Having made such a determination, server 58 can advise device 54 at block 330c as to which bearer path 70 will in fact deliver the greatest speeds.

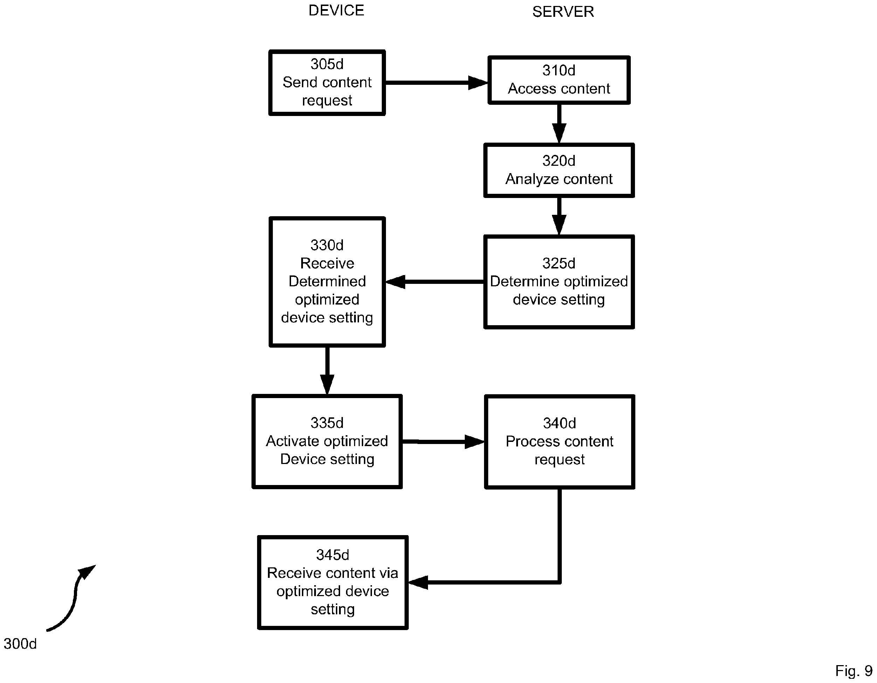

Referring now to Figure 9, a flowchart depicting a method of selecting an optimal bearer path is indicated generally at 300d. Method 300d can be implemented on system 50 or a suitable variation thereof. Method 300d can also be varied in substantially the same manner that method 300 is varied to provide method 300b. Method 300d is a variation of method 300d. Of note is that in method 300d, at block 325c server 58 determines an optimal device setting and at block 330d device 54 receives the determined optimal bearer from server 58. The determination at block 325c can be based on different criteria, other than, or in addition to, whether or not the consumption of battery 144 resources is optimized.

An exemplary criteria includes a determination as to whether the speed at which the content can be reasonably delivered, or any bearer path, is so low that there is an expectation that device 54 may determine that the actual content delivery has failed. In this example, the determination at block 325d can be "There is bearer available path that will deliver reasonable speeds; cache the content request until such a bearer path becomes available and activate that bearer path prior to proceeding with content request". Block 335d will then provide for device 54 waiting until such a bearer path becomes available, and at that point activating that bearer path and thereafter method 300d continues as usual.

## Claims

1. A method of managing battery resources in a wireless device (54) connected to a network (62) via a plurality of bearer paths (70-1, 70-2, 70-3), said method comprising:
receiving a content request from said wireless device (54) in at least one intermediation server (58) via one of said bearer paths (70-1, 70-2, 70-3);
accessing the requested content (310) by one of said at least one intermediation servers (58);
performing an analysis of the accessed content (320) associated with said content request in one of said at least one intermediation servers (58), wherein said analysis (320) comprises analyzing a complexity of embedded graphics or media within said content;
determining (325) a battery-optimized bearer path (70-1, 70-2, 70-3) based on said analysis (320) of said content in one of said at least one intermediation servers (58); said battery-optimized bearer path (70-1, 70-2, 70-3) determined according to which of said bearer paths (70-1, 70-2, 70-3) consumes less battery resources of said wireless device (54) than another one of said bearer paths (70-1, 70-2, 70-3), and which is also capable of fulfilling said content request;
sending an indication of said battery-optimized bearer path (70-1, 70-2, 70-3) from one of said at least one intermediation servers (58) to said wireless device (54) via one of said bearer paths (70-1, 70-2, 70-3);
processing the content request (340) by one of said at least one intermediation servers (58); and
sending said content to said wireless device (54) from one of said at least one intermediation servers (58) via said determined battery-optimized bearer path (70-1, 70-2, 70-3).

2. The method of claim 1 further comprising receiving said indication at said wireless device (54) and selecting said battery-optimized bearer path (70-1, 70-2, 70-3).

3. The method of claim 2 further comprising receiving said content at said wireless device (54) via said battery-optimized bearer path (70-1. 70-2, 70-3).

4. The method of claim 1 further comprising optimizing said content according to the hardware constraints of said wireless device (54) prior to sending said content via said battery-optimized bearer path (70-1, 70-2, 70-3).

5. The method of any one of claims 1 to 4 wherein said content is at least one of web-pages, email, audio media, video media, streaming media, instant messaging, mapping services, voice-over-Internet-protocol communications, social networking services.

6. The method of any one of claim 1 to 5 wherein a first one of said bearer paths (70-1, 70-2, 70-3) comprises an Enhanced Data Rates for GSM Evolution 'EDGE,' bearer path and a second of said bearer paths (70-1, 70-2, 70-3) comprises a Third-generation mobile communication system '3G' bearer path.

7. The method of any one of claims 1 to 6 wherein said receiving and performing is executed at a first intermediation server (58) and said determining and said sending is performed at a second intermediation server (58); said method further comprising sending said analysis from said first intermediation server (58) to said second intermediation server (58).

8. The method of claim 7 when depending from claim 3 wherein said content is encrypted by said first intermediation server (58) and decrypted by said wireless device (54).

9. A system for managing battery resources in a wireless device (54) connected to a network (62) via a plurality of bearer paths (70-1, 70-2, 70-3), said system comprising:
means for receiving a content request from said wireless device (54) in at least one intermediation server (58) via one of said bearer paths (70-1, 70-2, 70-3);
means for accessing the requested content (310);
means for performing an analysis of the accessed content associated with said content request in one of said at said intermediation servers (58), wherein said analysis (320) comprises analyzing a complexity of embedded graphics or media within said content;
means for determining a battery-optimized bearer path (70-1, 70-2, 70-3) based on said analysis of said content in one of said at least one intermediation servers (58); said battery-optimized bearer path (70-1, 70-2, 70-3) determined according to which of said bearer paths (70-1, 70-2, 70-3) consumes less battery resources of said wireless device (54) than another one of said bearer paths (70-1, 70-2, 70-3). and which is also capable of fulfilling said content request; and
means for sending an indication of said battery-optimized bearer path (70-1, 70-2, 70-3) from one of said at least one intermediation servers (58) to said wireless device (54) via one of said bearer paths (70-1, 70-2, 70-3);
means for processing the content request (340); and
means for sending said content to said wireless device (54) via said determined battery-optimized bearer path (70-1, 70-2, 70-3).

10. A wireless electronic device (54) connected to a network (62) via a plurality of bearer paths (70-1, 70-2, 70-3),
said device (54) comprising a computing environment comprising non-volatile storage (112), volatile storage (1 16), and a plurality of wireless network interfaces (128-1, 128-2, 128-3) interconnected by at least one processor (108),
said network interfaces (128-1, 128-2, 128-3) connected to said network (62) via each of said bearer paths (70-1, 70-2, 70-3);
said processor (108) configured to send a content request via one of said bearer paths (70-1, 70-2, 70-3) and to receive an indication from an intermediation server (58) of a battery- optimized bearer path (70-1, 70-2, 70-3),
said battery-optimized bearer path (70-1, 70-2, 70-3) based on an analysis of requested content by said intermediation server (58), wherein said analysis (320) comprises analyzing a complexity of embedded graphics or media within said content;
said battery-optimized bearer path (70-1, 70-2, 70-3) determined according to which of said bearer paths (70-1, 70-2, 70-3) consumes less battery resources of said wireless electronic device (54) than another of said bearer paths (70-1, 70-2, 10 70-3), and which is also capable of fulfilling said content request; and
said processor (108) further configured to select one of said bearer paths (70-1, 70-2, 70-3) based on said indication; and
said device (54) is configured to receive said content via said battery-optimized bearer path (70-1, 70-2, 70-3).

11. An intermediation server (58) configured to assist in managing battery resources in a wireless device (54) connected to a network (62) via a plurality of bearer paths (70-1, 70-2, 70-3), said server comprising a computing environment comprising non-volatile storage, volatile storage, and a network interface connected by at least one processor;
said network interface being connected to said wireless device (54) by at least one of said bearers paths (70-1, 70-2, 70-3);
said processor configured to receive a content request from said wireless device (54) via one of said bearer paths (70-1, 70-2, 70-3);
said processor configured to access the requested content (310);
said processor configured to perform an analysis of the accessed content associated with said content request and to determine a battery optimized bearer path (70-1, 70-2, 70-3) based on said analysis of said content, wherein said analysis (320) comprises analyzing a complexity of embedded graphics or media within said content;
said battery-optimized bearer path (70-1, 70-2, 70-3) determined according to which of said bearer paths (70-1, 70-2, 70-3) consumes less battery resources of said wireless device (54) than another one of said bearer paths (70-1, 70-2. 70-3), and which is also capable of fulfilling said content request;
said processor further configured to send an indication of said battery-optimized bearer path (70-1, 70-2, 70-3) to said wireless device (54) via one said bearer paths (70-1, 70-2, 70-3);
said processor configured to process the content request (340); and
said processor configured to send said content to said wireless device (54) via said determined battery-optimized bearer path (70-1, 70-2, 70-3).

## Patentansprüche

1. Verfahren zum Verwalten von Batterieressourcen in einer drahtlosen Vorrichtung (54), die über eine Mehrzahl von Trägerpfaden (70-1, 70-2, 70-3) mit einem Netzwerk (62) verbunden ist, wobei das Verfahren umfasst:
Empfangen einer Inhaltsanfrage von der drahtlosen Vorrichtung (54) auf zumindest einem Intermediationsserver (58) über einen der Trägerpfade (70-1, 70-2, 70-3);
Zugreifen auf den angeforderten Inhalt (310) durch einen des zumindest einen Intermediationsservers (58);
Durchführen einer Analyse des zugegriffenen Inhalts (320) in Assoziation mit der Inhaltsanfrage auf einem des zumindest einen Intermediationsservers (58), wobei die Analyse (320) das Analysieren einer Komplexität eingebetteter Graphiken oder Medien innerhalb des Inhalts umfasst;
Ermitteln (325) eines batterieoptimierten Trägerpfads (70-1, 70-2, 70-3) auf Basis der Analyse (320) des Inhalts auf einem des zumindest einen Intermediationsservers (58); wobei der batterieoptimierte Trägerpfad (70-1, 70-2, 70-3) demgemäß ermittelt wird, welcher der Trägerpfade (70-1, 70-2, 70-3) weniger Batterieressourcen der drahtlosen Vorrichtung (54) als ein anderer der Trägerpfade (70-1, 70-2, 70-3) verbraucht und welcher auch in der Lage ist, die Inhaltsanfrage zu erfüllen;
Senden einer Angabe des batterieoptimierten Trägerpfads (70-1, 70-2, 70-3) von einem des zumindest einen Intermediationsservers (58) über einen der Trägerpfade (70-1, 70-2, 70-3) an die drahtlose Vorrichtung (54);
Verarbeiten der Inhaltsanfrage (340) durch einen des zumindest einen Intermediationsservers (58); und
Senden des Inhalts von einem des zumindest einen Intermediationsservers (58) über den ermittelten batterieoptimierten Trägerpfad (70-1, 70-2, 70-3) an die drahtlose Vorrichtung (54).

2. Verfahren nach Anspruch 1, das ferner das Empfangen der Angabe auf der drahtlosen Vorrichtung (54) und das Auswählen des batterieoptimierten Trägerpfads (70-1, 70-2, 70-3) umfasst.

3. Verfahren nach Anspruch 2, das ferner das Empfangen des Inhalts auf der drahtlosen Vorrichtung (54) über den batterieoptimierten Trägerpfad (70-1, 70-2, 70-3) umfasst.

4. Verfahren nach Anspruch 1, das ferner das Optimieren des Inhalts gemäß den Hardwareeinschränkungen der drahtlosen Vorrichtung (54) vor Senden des Inhalts über den batterieoptimierten Trägerpfad (70-1, 70-2, 70-3) umfasst.

5. Verfahren nach einem der Ansprüche 1 bis 4, wobei der Inhalt zumindest eines von Webseiten, E-Mail, Audiomedien, Videomedien, Streamingmedien, Instant Messaging, Kartierungsdiensten, Voice-over-Internet-Protocol-Kommunikation, Social-Networking-Diensten ist.

6. Verfahren nach einem der Ansprüche 1 bis 5, wobei ein erster der Trägerpfade (70-1, 70-2, 70-3) einen Enhanced-Data-Rates-for-GSM-Evolution-EDGE-Trägerpfad umfasst und ein zweiter der Trägerpfade (70-1, 70-2, 70-3) einen Mobilkommunikationssystem-der-dritten-Generation-3G-Trägerpfad umfasst.

7. Verfahren nach einem der Ansprüche 1 bis 6, wobei das Empfangen und Durchführen auf einem ersten Intermediationsserver (58) durchgeführt werden und das Ermitteln und Senden auf einem zweiten Intermediationsserver (58) durchgeführt werden; wobei das Verfahren ferner das Senden der Analyse vom ersten Intermediationsserver (58) zum zweiten Intermediationsserver (58) umfasst.

8. Verfahren nach Anspruch 7, wenn von Anspruch 3 abhängig, wobei der Inhalt vom ersten Intermediationsserver (58) verschlüsselt und von der drahtlosen Vorrichtung (54) entschlüsselt wird.

9. System zum Verwalten von Batterieressourcen in einer drahtlosen Vorrichtung (54), die über eine Mehrzahl von Trägerpfaden (70-1, 70-2, 70-3) mit einem Netzwerk (62) verbunden ist, wobei das System umfasst:
ein Mittel zum Empfangen einer Inhaltsanfrage von der drahtlosen Vorrichtung (54) auf zumindest einem Intermediationsserver (58) über einen der Trägerpfade (70-1, 70-2, 70-3);
ein Mittel zum Zugreifen auf den angeforderten Inhalt (310);
ein Mittel zum Durchführen einer Analyse des zugegriffenen Inhalts in Assoziation mit der Inhaltsanfrage auf einem des einen Intermediationsservers (58), wobei die Analyse (320) das Analysieren einer Komplexität eingebetteter Graphiken oder Medien innerhalb des Inhalts umfasst;
ein Mittel zum Ermitteln eines batterieoptimierten Trägerpfads (70-1, 70-2, 70-3) auf Basis der Analyse des Inhalts auf einem des zumindest einen Intermediationsservers (58); wobei der batterieoptimierte Trägerpfad (70-1, 70-2, 70-3) demgemäß ermittelt wird, welcher der Trägerpfade (70-1, 70-2, 70-3) weniger Batterieressourcen der drahtlosen Vorrichtung (54) als ein anderer der Trägerpfade (70-1, 70-2, 70-3) verbraucht und welcher auch in der Lage ist, die Inhaltsanfrage zu erfüllen; und
ein Mittel zum Senden einer Angabe des batterieoptimierten Trägerpfads (70-1, 70-2, 70-3) von einem des zumindest einen Intermediationsservers (58) über einen der Trägerpfade (70-1, 70-2, 70-3) an die drahtlose Vorrichtung (54);
ein Mittel zum Verarbeiten der Inhaltsanfrage (340); und
ein Mittel zum Senden des Inhalts an die drahtlose Vorrichtung (54) über den ermittelten batterieoptimierten Trägerpfad (70-1, 70-2, 70-3).

10. Drahtlose elektronische Vorrichtung (54), die über eine Mehrzahl von Trägerpfaden (70-1, 70-2, 70-3) mit einem Netzwerk (62) verbunden ist,
wobei die Vorrichtung (54) eine Datenverarbeitungsumgebung umfasst, die einen nichtflüchtigen Speicher (112), einen flüchten Speicher (1 16) und eine Mehrzahl von drahtlosen Netzwerkschnittstellen (128-1, 128-2, 128-3) umfasst, die durch zumindest einen Prozessor (108) miteinander verbunden sind,
wobei die Netzwerkschnittstellen (128-1, 128-2, 128-3) über jeden der Trägerpfade (70-1, 70-2, 70-3) mit dem Netzwerk (62) verbunden sind;
wobei der Prozessor (108) so konfiguriert ist, dass er eine Inhaltsanfrage über einen der Trägerpfade (70-1, 70-2, 70-3) sendet und eine Angabe vom Intermediationsserver (58) eines batterieoptimierten Trägerpfads (70-1, 70-2, 70-3) empfängt,
wobei der batterieoptimierte Trägerpfad (70-1, 70-2, 70-3) auf einer Analyse eines angeforderten Inhalts durch den Intermediationsserver (58) basiert, wobei die Analyse (320) das Analysieren einer Komplexität eingebetteter Graphiken oder Medien innerhalb des Inhalts umfasst;
wobei der batterieoptimierte Trägerpfad (70-1, 70-2, 70-3) demgemäß ermittelt wird, welcher der Trägerpfade (70-1, 70-2, 70-3) weniger Batterieressourcen der drahtlosen elektronischen Vorrichtung (54) als ein anderer der Trägerpfade (70-1, 70-2, 70-3) verbraucht und welcher auch in der Lage ist, die Inhaltsanfrage zu erfüllen; und
wobei der Prozessor (108) ferner so konfiguriert ist, dass er einen der Trägerpfade (70-1, 70-2, 70-3) auf Basis der Angabe auswählt; und
wobei die Vorrichtung (54) so konfiguriert ist, dass sie den Inhalt über den batterieoptimierten Trägerpfad (70-1, 70-2, 70-3) empfängt.

11. Intermediationsserver (58), der so konfiguriert ist, dass er eine Verwaltung von Batterieressourcen in einer drahtlosen Vorrichtung (54) unterstützt, die über eine Mehrzahl von Trägerpfaden (70-1, 70-2, 70-3) mit einem Netzwerk (62) verbunden ist, wobei der Server eine Datenverarbeitungsumgebung umfasst, die einen nichtflüchtigen Speicher, einen flüchtigen Speicher und eine Netzwerkschnittstelle umfasst, durch zumindest einen Prozessor verbunden;
wobei die Netzwerkschnittstelle durch zumindest einen der Trägerpfade (70-1, 70-2, 70-3) mit der drahtlosen Vorrichtung (54) verbunden ist;
wobei der Prozessor so konfiguriert ist, dass er eine Inhaltsanfrage von der drahtlosen Vorrichtung (54) über einen der Trägerpfade (70-1, 70-2, 70-3) empfängt;
wobei der Prozessor so konfiguriert ist, dass er auf den angeforderten Inhalt (310) zugreift;
wobei der Prozessor so konfiguriert ist, dass er eine Analyse des zugegriffenen Inhalts in Assoziation mit der Inhaltsanfrage durchführt und einen batterieoptimierten Trägerpfad (70-1, 70-2, 70-3) auf Basis der Analyse des Inhalts ermittelt, wobei die Analyse (320) das Analysieren einer Komplexität eingebetteter Graphiken oder Medien innerhalb des Inhalts umfasst;
wobei der batterieoptimierte Trägerpfad (70-1, 70-2, 70-3) demgemäß ermittelt wird, welcher der Trägerpfade (70-1, 70-2, 70-3) weniger Batterieressourcen der drahtlosen Vorrichtung (54) als ein anderer der Trägerpfade (70-1, 70-2, 70-3) verbraucht und welcher auch in der Lage ist, die Inhaltsanfrage zu erfüllen;
wobei der Prozessor ferner so konfiguriert ist, dass er eine Angabe des batterieoptimierten Trägerpfads (70-1, 70-2, 70-3) über den einen Trägerpfad (70-1, 70-2, 70-3) an die drahtlose Vorrichtung (54) sendet;
wobei der Prozessor so konfiguriert ist, dass er die Inhaltsanfrage (340) verarbeitet; und
wobei der Prozessor so konfiguriert ist, dass er den Inhalt über den ermittelten batterieoptimierten Trägerpfad (70-1, 70-2, 70-3) an die drahtlose Vorrichtung (54) sendet.

## Revendications

1. Procédé de gestion de ressources de batterie dans un dispositif sans fil (54) connecté à un réseau (62) par l'intermédiaire d'une pluralité de chemins support (70-1, 70-2, 70-3), ledit procédé comprenant le fait :
de recevoir une demande de contenu à partir dudit dispositif sans fil (54) dans au moins un serveur d'intermédiation (58) par l'intermédiaire de l'un desdits chemins support (70-1, 70-2, 70-3) ;
d'accéder au contenu demandé (310) par l'un dudit au moins un serveur d'intermédiation (58) ;
d'exécuter une analyse du contenu accédé (320) associé à ladite demande de contenu dans l'un dudit au moins un serveur d'intermédiation (58), ladite analyse (320) comprenant l'analyse d'une complexité de graphiques ou de médias intégrés dans ledit contenu ;
de déterminer (325) un chemin support à optimisation batterie (70-1, 70-2, 70-3) sur la base de ladite analyse (320) dudit contenu dans l'un dudit au moins un serveur d'intermédiation (58) ; ledit chemin support à optimisation batterie (70-1, 70-2, 70-3) étant déterminé en fonction du chemin, parmi lesdits chemins support (70-1, 70-2, 70-3), qui consomme moins de ressources de batterie dudit dispositif sans fil (54) qu'un autre chemin parmi lesdits chemins support (70-1, 70-2, 70-3), et qui est également capable de satisfaire ladite demande de contenu ;
d'envoyer une indication dudit chemin support à optimisation batterie (70-1, 70-2, 70-3) à partir de l'un dudit au moins un serveur d'intermédiation (58) audit dispositif sans fil (54) par l'intermédiaire de l'un desdits chemins support (70 -1, 70-2, 70-3) ;
de traiter la demande de contenu (340) par l'un dudit au moins un serveur d'intermédiation (58) ; et
d'envoyer ledit contenu audit dispositif sans fil (54) à partir de l'un dudit au moins un serveur d'intermédiation (58) par l'intermédiaire dudit chemin support à optimisation batterie déterminé (70-1, 70-2, 70-3).

2. Procédé de la revendication 1, comprenant en outre la réception de ladite indication au niveau dudit dispositif sans fil (54) et la sélection dudit chemin support à optimisation batterie (70-1, 70-2, 70-3).

3. Procédé de la revendication 2, comprenant en outre la réception dudit contenu au niveau dudit dispositif sans fil (54) par l'intermédiaire dudit chemin support à optimisation batterie (70-1, 70-2, 70-3).

4. Procédé de la revendication 1, comprenant en outre l'optimisation dudit contenu en fonction des contraintes matérielles dudit dispositif sans fil (54) avant l'envoi dudit contenu par l'intermédiaire dudit chemin support à optimisation batterie (70-1, 70-2, 70-3).

5. Procédé de l'une quelconque des revendications 1 à 4, dans lequel ledit contenu représente au moins l'un de pages Web, d'un courrier électronique, d'un média audio, d'un média vidéo, d'un média en continu, d'une messagerie instantanée, de services de cartographie, de communications voix sur protocole internet, de services de réseautage social.

6. Procédé de l'une quelconque des revendications 1 à 5, dans lequel un premier chemin parmi lesdits chemins support (70-1, 70-2, 70-3) comprend des débits de données améliorés pour un chemin support d'évolution GSM 'EDGE' et un deuxième chemin parmi lesdits chemins support (70-1, 70-2, 70-3) comprend un chemin support de système de communication mobile de Troisième génération '3G'.

7. Procédé de l'une quelconque des revendications 1 à 6, dans lequel ladite réception et exécution sont effectuées au niveau d'un premier serveur d'intermédiation (58) et ladite détermination et ledit envoi sont effectués au niveau d'un deuxième serveur d'intermédiation (58) ; ledit procédé comprenant en outre l'envoi de ladite analyse dudit premier serveur d'intermédiation (58) audit deuxième serveur d'intermédiation (58).

8. Procédé de la revendication 7, lorsqu'elle dépend de la revendication 3, dans lequel ledit contenu est crypté par ledit premier serveur d'intermédiation (58) et décrypté par ledit dispositif sans fil (54).

9. Procédé de gestion de ressources de batterie dans un dispositif sans fil (54) connecté à un réseau (62) par l'intermédiaire d'une pluralité de chemins support (70-1, 70-2, 70-3), ledit procédé comprenant :
un moyen pour recevoir une demande de contenu à partir dudit dispositif sans fil (54) dans au moins un serveur d'intermédiation (58) par l'intermédiaire de l'un desdits chemins support (70-1, 70-2, 70-3) ;
un moyen pour accéder au contenu demandé (310) ;
un moyen pour exécuter une analyse du contenu accédé associé à ladite demande de contenu dans l'un dudit au moins un serveur d'intermédiation (58), où ladite analyse (320) comprend l'analyse d'une complexité de graphiques ou de médias intégrés dans ledit contenu ;
un moyen pour déterminer un chemin support à optimisation batterie (70-1, 70-2, 70-3) sur la base de ladite analyse dudit contenu dans l'un dudit au moins un serveur d'intermédiation (58) ; ledit chemin support à optimisation batterie (70-1, 70-2, 70-3) étant déterminé en fonction du chemin, parmi lesdits chemins support (70-1, 70-2, 70-3), qui consomme moins de ressources de batterie dudit dispositif sans fil (54) qu'un autre chemin parmi lesdits chemins support (70-1, 70-2, 70-3), et qui est également capable de satisfaire ladite demande de contenu ; et
un moyen pour envoyer une indication dudit chemin support à optimisation batterie (70-1, 70-2, 70-3) à partir de l'un dudit au moins un serveur d'intermédiation (58) audit dispositif sans fil (54) par l'intermédiaire de l'un desdits chemins support (70-1, 70-2, 70-3) ;
un moyen pour traiter la demande de contenu (340) ; et
un moyen pour envoyer ledit contenu audit dispositif sans fil (54) par l'intermédiaire dudit chemin support à optimisation batterie (70-1, 70-2, 70-3).

10. Dispositif électronique sans fil (54) connecté à un réseau (62) par l'intermédiaire d'une pluralité de chemins support (70-1, 70-2, 70-3),
ledit dispositif (54) comprenant un environnement informatique comprenant une mémoire non volatile (112), une mémoire volatile (116), et une pluralité d'interfaces réseau sans fil (128-1, 128-2, 128-3) interconnectées par au moins un processeur (108),
lesdites interfaces réseau (128-1, 128-2, 128-3) étant connectées audit réseau (62) par l'intermédiaire de chacun desdits chemins support (70-1, 70-2, 70-3) ;
ledit processeur (108) étant configuré pour envoyer une demande de contenu par l'intermédiaire de l'un desdits chemins support (70-1, 70-2, 70-3) et pour recevoir une indication à partir d'un serveur d'intermédiation (58) d'un chemin support à optimisation batterie (70-1, 70-2, 70-3),
ledit chemin support à optimisation batterie (70-1, 70-2, 70-3) étant basé sur une analyse d'un contenu demandé par ledit serveur d'intermédiation (58), où ladite analyse (320) comprend l'analyse d'une complexité de graphiques ou de médias intégrés dans ledit contenu ;
ledit chemin support à optimisation batterie (70-1, 70-2, 70-3) étant déterminé en fonction du chemin, parmi lesdits chemins support (70-1, 70-2, 70-3), qui consomme moins de ressources de batterie dudit dispositif sans fil (54) qu'un autre chemin parmi lesdits chemins support (70-1, 70-2, 70-3), et qui est également capable de satisfaire ladite demande de contenu ; et
ledit processeur (108) étant en outre configuré pour sélectionner l'un desdits chemins support (70-1, 70-2, 70-3) sur la base de ladite indication ; et
ledit dispositif (54) est configuré pour recevoir ledit contenu par l'intermédiaire dudit chemin support à optimisation batterie (70-1, 70-2, 70-3).

11. Serveur d'intermédiation (58) configuré pour assister la gestion des ressources de batterie dans un dispositif sans fil (54) connecté à un réseau (62) par l'intermédiaire d'une pluralité de chemins support (70-1, 70-2, 70-3), ledit serveur comprenant un environnement informatique comprenant une mémoire non volatile, une mémoire volatile, et une interface réseau connectée par au moins un processeur ;
ladite interface réseau étant connectée audit dispositif sans fil (54) par au moins l'un desdits chemins support (70-1, 70-2, 70-3) ;
ledit processeur étant configuré pour recevoir une demande de contenu à partir dudit dispositif sans fil (54) par l'intermédiaire de l'un desdits chemins support (70-1, 70-2, 70-3) ;
ledit processeur étant configuré pour accéder au contenu demandé (310) ;
ledit processeur étant configuré pour exécuter une analyse du contenu accédé associé à ladite demande de contenu et pour déterminer un chemin support à optimisation batterie (70-1, 70-2, 70-3) sur la base de ladite analyse dudit contenu, où ladite analyse (320) comprend l'analyse d'une complexité de graphiques ou de médias intégrés dans ledit contenu ;
ledit chemin support à optimisation batterie (70-1, 70-2, 70-3) étant déterminé en fonction du chemin, parmi lesdits chemins support (70-1, 70-2, 70-3), qui consomme moins de ressources de batterie dudit dispositif sans fil (54) qu'un autre chemin parmi lesdits chemins support (70-1, 70-2, 70-3), et qui est également capable de satisfaire ladite demande de contenu ;
ledit processeur étant en outre configuré pour envoyer une indication dudit chemin support à optimisation batterie (70-1, 70-2, 70-3) audit dispositif sans fil (54) par l'intermédiaire de l'un desdits chemins support (70-1, 70-2, 70-3) ;
ledit processeur étant configuré pour traiter la demande de contenu (340) ; et
ledit processeur étant configuré pour envoyer ledit contenu audit dispositif sans fil (54) par l'intermédiaire dudit chemin support à optimisation batterie (70-1, 70-2, 70-3).
